(19) Europäisches Patentamt / European Patent Office / Office européen des brevets

(11) **EP 2 894 772 A1**

(12) **EUROPEAN PATENT APPLICATION**
published in accordance with Art. 153(4) EPC

(43) Date of publication:
**15.07.2015 Bulletin 2015/29**

(21) Application number: **12884148.3**

(22) Date of filing: **06.09.2012**

(51) Int Cl.:
***H02K 16/02*** (2006.01)          ***H02K 21/12*** (2006.01)
***H02K 3/04*** (2006.01)            ***H02K 1/06*** (2006.01)

(86) International application number:
**PCT/RU2012/000742**

(87) International publication number:
**WO 2014/038971 (13.03.2014 Gazette 2014/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Obschestvo s ogranichennoy otvetstvennostyu 'Tovarischestvo energeticheskikh i electromobilnikh proektov' Moscow 127018 (RU)**

(72) Inventors:
• **DASHKO, Oleg Grigorievich Moskovskaya oblast g. Korolev 141077 (RU)**

• **DOLGOLAPTEV, Anatoly Vasilyevich Moskovskaya oblast pos. Pestovo 140071 (RU)**
• **ZENIN, Sergey Borisovich Moskovskaya oblast g. Korolev 141075 (RU)**
• **ZAKHARENKO, Andrey Borisovich Moscow 111033 (RU)**
• **LITVINOV, Vladimir Nikolaevich Moskovskaya oblast Pushkino 141207 (RU)**
• **MASHUROV, Sergey Ivanovich Moskovskaya oblast Mytischi 141002 (RU)**

(74) Representative: **Maiwald Patentanwalts GmbH Elisenhof Elisenstrasse 3 80335 München (DE)**

(54) **ELECTROMECHANICAL CONVERTER**

(57)    The present invention provides an electromechanical converter (electrical machine) comprising a stator and a rotatably mounted rotor, wherein the stator is configured as a plurality of separate teeth around which a winding is provided, wherein the rotor is configured as two interconnected yokes located inside and outside the stator on which radially magnetized pole-forming permanent magnets are fixed, wherein the polarity of adjacent permanent magnets alternates, number of permanent magnets on both yokes coincides, wherein the said yokes are interconnected so that the polarity of permanent magnets on inner and outer yokes is aiding and the number of rotor poles is equal to the number of periods of one of the higher harmonicas of the stator winding MMF.

The technical result of the invention is the improvement of weight-and-dimensional characteristics of the apparatus.

EP 2 894 772 A1

**Description**

Technical field

This invention relates to electrical engineering, and more particularly to electromechanical converters (electrical machines), and may be used as low-speed high-torque motors of power wheels to drive various vehicles, as well as elevator drive motors, car starter-generators and low-speed generators for wind machines and damless hydraulic power plats, etc.

Background

The prior art knows an electromechanical converter (patent of the Russian Federation No. 2302692) comprising at least one stator-rotor pair in which the stator comprises cores made of a high-permeability material with their ends connected to the stator support ring and oriented parallel to the main magnet flux, and between which conductors of a multi-phase winding are located, wherein the rotor is configured as two coaxially spaced outer and inner inductors, i.e. magnetic cores made of a high-permeability material shaped as hollow cylinders mounted rotatably with respect to the stator and bearing circumferentially-spaced alternating-polarity poles facing the stator through working gaps and surrounding it, wherein the polarity of poles located on outer and inner inductors opposite to each other is aiding. Number of poles (2·p), number of pole pairs (p), number of stator cores (z) and number of coil groups in a phase (d) are interrelated as follows:

$$p / d = k,$$

where k = 1, 1.5,2,2.5,3,3.5 ... is a positive integer or a number differed from an integer by 0.5, wherein if k is an integer, windings of coil groups in each phase are characterized by aiding connection, and if k differs from an integer by 0.5 and d is an integer (2, 4, 6 ...), windings of coil groups in each phase are characterized by opposing connection, and

$$0.5 < z < (2·p) < 2,$$

wherein z/(2·p) ≠ 1.
*Disadvantage* of this converter is that "torque-mass" and "output-mass" ratios are not optimum. The reason for this is that the number of rotor poles is not associated with the number of periods of the stator winding MMF higher harmonic having maximum amplitude.
The said drawback has been eliminated in the electrical machine according to the patent of Russian Federation No. 2437196 comprising a stator and two rotors. The stator is configured as a plurality of separate teeth with a winding and without any yoke, wherein the rotor is configured as concentric sleeves made of high-permeability material located outside and inside the stator, on which radially magnetized permanent magnets are fixed, wherein the polarity of adjacent permanent magnets alternates, each teeth has a concentric winding, number of the first rotor poles is equal to the number of periods of the stator winding MMF first fundamental harmonic, number of the second rotor poles is equal to the number of periods of the stator winding MMF second fundamental harmonic, and rotors are characterized by opposite directions of rotation.
The fact that the said machine has two rotors with different number of poles rotating in opposite directions makes it inconvenient for use in a number of applications, for example, in motorized wheels.

Summary

The object of this invention is to provide a contactless electrical machine with enhanced reliability.
Another object of this invention is to provide an electrical machine with maximum "torque-mass" and "output-mass" ratios.
The present invention may contribute to achieve the said objects due to creation of electromechanical converter equipped with a stator configured as a plurality of separate teeth and a rotor having the following features:

    a) rotor is configured as two interconnected yokes concentrically spaced inside and outside the stator;
    b) radially magnetized pole-forming magnets are fixed on the said yokes, wherein the number of permanent magnets on both outer and inner yokes coincides, polarity of adjacent permanent magnets alternates, and the said yokes are interconnected so that the polarity of permanent magnets fixed on them is aiding;
    c) number of rotor poles is equal to the number of periods of one of the stator MMF higher harmonics.

Windings with fractional numbers of times per each pole and phase q < 1, where q = Z/2·p·m, located on the stator have extensive composition of MMF harmonics. However two MMF harmonics have the greatest amplitude and rotate in opposite directions with different, although close to each other, numbers of periods per unit time (pole pairs). MMF of such a winding may be written as follows:

$$F = F_{1m}·\sin(\omega_1 t - p_1\alpha) - F_{2m}·\sin(\omega_1 t - p_2\alpha),$$

where $F_{1m}$ and $F_{2m}$ are amplitudes of harmonics with the greatest amplitude, $\omega_1 t$ is the angular frequency, *t* is the

time, $p_1$ and $p_2$ are numbers of periods (pole pairs) of the said harmonics. If to create an electrical machine with a rotor characterized by $p = p_1$ or $p = p_2$ number of pole pairs, the rotor having the same number of pole pairs as a corresponding harmonic would interact with it.

According to the present invention the number of rotor poles shall be equal to the number of periods of one of the higher harmonics of the stator winding MMF. For a three-phase winding (m=3) the following ratio between numbers of armature tooth Z (where $Z = y \cdot m \cdot k$) and pairs of rotor poles $p$ shall be true:

$$p = y \cdot k,$$

where $y = 1$;

$$p = (y + 1) \cdot k,$$

where $y = 1, 3, 4$;

$$p = (y + 2) \cdot k,$$

where $y = 3, 4, 5$;

$$p = (y + 3) \cdot k,$$

where $y = 5, 7, 8$;

$$p = (y + 4) \cdot k,$$

where $y = 7, 8, 9$;

$$p = (y + 5) \cdot k,$$

where $y = 9, 11$;

$$p = (y + 6) \cdot k,$$

where $y = 11$,
wherein k is a positive integer denoting the number of cycling sections of the magnetic structure.

Phases of the three-phase winding may be either star- or delta-connected.

Electrical machine may operate both in motor mode (when voltage is applied to the stator winding) and in generator mode (when rotor is driven by external mechanical device).

Brief description of the drawings

The invention is disclosed with reference to the accompanying drawings, where:

Fig. 1 is a cross section of the electrical machine active part, where number of stator tooth is Z = 15, and number of pairs of rotor poles is $p = 8$; and

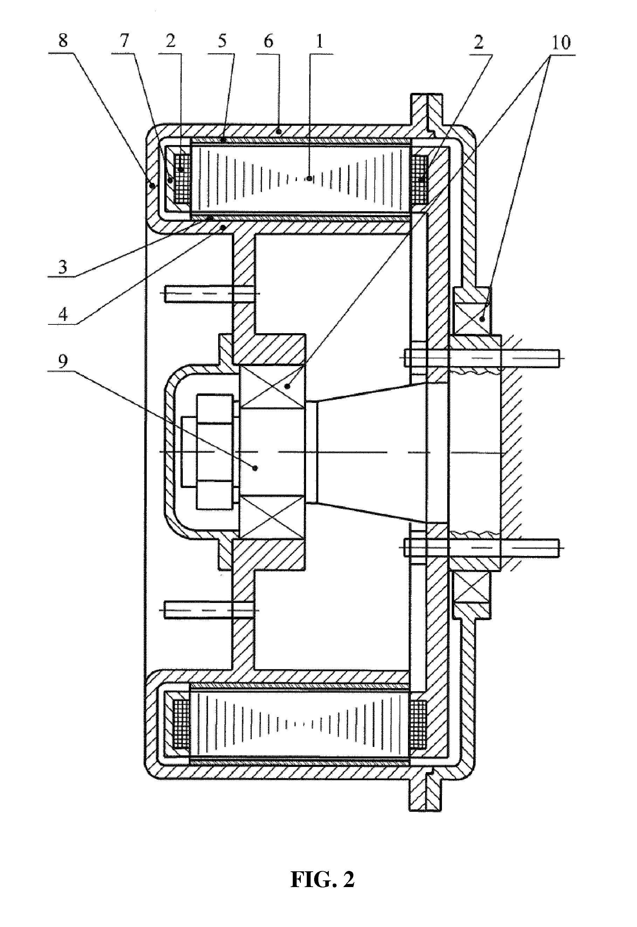

Fig. 2 is a longitudinal section of the electrical machine active part.

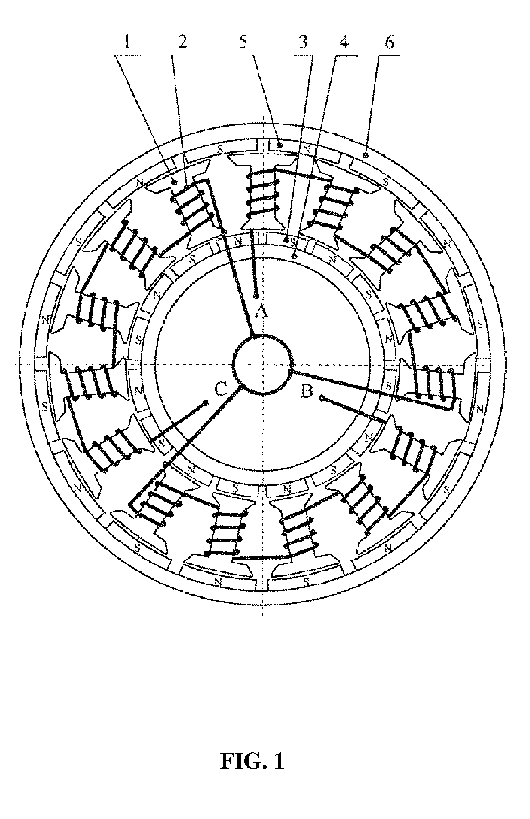

Fig. 1 illustrates the electrical machine active part and the stator winding diagram for the embodiment where number of tooth 1 of the stator core is Z = 15, wherein a three-phase star-connected winding 2 is provided, where *A, B* and C are starting points of corresponding phases. Winding 2 may also be delta connected. The number of rotor poles is $p = 8$, wherein rotor poles are formed be means of eight pairs of alternating-polarity permanent magnets 3 attached to the inner yoke 4 of the rotor and eight pairs of alternating-polarity permanent magnets 5 attached to the outer yoke 6 of the rotor. Adjacent coils in the stator coil group shall be connected in opposition because they are located mainly underneath the rotor poles of opposite polarity. Coils in the coil groups and the coil groups of phases shall be interconnected identically in all phases. Rotor's yokes 4 and 6 shall be manufactured by machining a casting or forging of a high-permeability structural steel, for example, steel 10. Stator's tooth 1 shall be laminated from sheets of electrotechnical steel, wherein the direction of stacking is perpendicular to the rotor axis of rotation. To reduce the stator manufacturing cost, the teeth and yoke may be made of a powdered magnetically soft material, for example, by pressing. To eliminate the rotor-to-stator magnetic attraction forces and associated *magnetic vibration,* the stator teeth 1 may be made of nonmagnetic nonconducting material. In this case a radial dimension of the tooth shall be maximally decreased so that to improve energy datum.

Coils of the stator winding 2 are wound with winding wire, for example copper enameled wire, around electrically insulating frames or tooth insulation of each stator teeth 1. To reduce electric ("ohmic") losses, a coil group or phase as a whole may be wound with a continuous wire (with no soldering operations). To simplify and automate the winding process, tooth 1 are manufactured separately, winding 2 is wound on tooth 1, and then tooth are fixed by stator support ring 7 attached to the housing 8. Upon completion of winding operations, winding 2 shall be impregnated with a lacquer or encapsulated in a compound so that to improve the insulation strength and reliability. Rotor hub rotates on the shaft 9 with the help of bearings 10.

Electrical machine operates as follows. Magnetic flux of the first permanent magnet 3 passes through the air gap between the stator and rotor, stator teeth 1, air gap between the stator and rotor, permanent magnet 5, outer yoke 6 of the inductor, permanent magnet 5, air gap between the stator and rotor, stator teeth 1, air gap between the stator and rotor, permanent magnet 3, and is closed on inner yoke 4. Alternating voltage is applied to the coils of the stator winding 2. When connecting voltage of frequency $f$ there will be generated two MMF harmonics with the greatest amplitudes rotating in opposite directions with the speed of $n_1 = f \cdot 60/p_1$ and $n_2 = f \cdot 60/p_2$. Correspondingly, the number of the rotor pole pairs shall be equal either to $p_1$ or to $p_2$.

Let us assume that the number of the rotor pole pairs is $p = p_1$. If the winding circuit is closed, electric current is flowing therethrough, wherein the MMF harmonics travel along teeth 1 with a winding 3 provided on them. The rotor's permanent magnets 3 and 5 interact with MMF harmonics with $p_1$ number of pole pairs, wherein a torque is applied to the rotor.

Electrical machine may also operate in generator mode, for example, as a wind-powered generator. If the rotor is rotated by external device (not shown), the rotor magnetic flux passes through the turns of stator winding 2, and an EMF is induced in the winding 2. If the winding circuit is closed, electric current is flowing therethrough, and power is put out as a load.

**Claims**

1. Electromechanical converter comprising a stator and a rotatably mounted rotor, wherein the stator is configured as a plurality of separate teeth around which a winding is provided, wherein the rotor is configured as two interconnected yokes, located inside and outside the stator on which radially magnetized pole-forming permanent magnets are fixed, wherein the polarity of adjacent permanent magnets alternates, number of permanent magnets on both yokes coincides, wherein the said yokes are interconnected so that the polarity of permanent magnets on inner and outer yokes is aiding and the number of rotor poles is equal to the number of periods of one of the higher harmonicas of the stator winding MMF.

2. Electromechanical converter according to claim 1, wherein the following ratio between numbers of armature tooth Z (where Z = $y \cdot m \cdot k$) and pairs of rotor poles $p$ is true for a three-phase winding (m=3):

$$p = y \cdot k,$$

where $y$ = 1;

$$p = (y + 1) \cdot k,$$

where $y$ = 1, 3, 4;

$$p = (y + 2) \cdot k,$$

where $y$ = 3, 4, 5;

$$p = (y + 3) \cdot k,$$

where $y$ = 5, 7, 8;

$$p = (y + 4) \cdot k,$$

where $y$ = 7, 8, 9;

$$p = (y + 5) \cdot k,$$

where $y$ = 9, 11;

$$p = (y + 6) \cdot k,$$

where $y$ = 11,
wherein k is a positive integer denoting the number of cycling sections of the magnetic structure.

3. Electromechanical converter according to claim 2, wherein phases of three-phase winding are star connected.

4. Electromechanical converter according to claim 2, wherein phases of three-phase winding are delta connected.

5. Electromechanical converter according to claim 1 or 2, operating in motor mode.

6. Electromechanical converter according to claim 1 or 2, operating in generator mode.

**FIG. 1**

**FIG. 2**

**EP 2 894 772 A1**

## INTERNATIONAL SEARCH REPORT

| International application No. |
| --- |
| PCT/RU 2012/000742 |

**A. CLASSIFICATION OF SUBJECT MATTER**
H02K 16/02 (2006.01 ); H02K 21/12 (2006.01); H02K 3/04 (2006.01); H02K 1/06 (2006.01)

According to International Patent Classification (IPC) or to both national classification and IPC

**B. FIELDS SEARCHED**

Minimum documentation searched (classification system followed by classification symbols)
H02K 16/00-16/02, 21/00-21/16, 21/22, 21/26-21/30, 21/38-21/48, 1/00-1/24, 1/27, 3/00-3/12, 3/28-3/30, 15/00-15/02, 15/08-15/085, 19/00-19/38

Documentation searched other than minimum documentation to the extent that such documents are included in the fields searched

Electronic data base consulted during the international search (name of data base and, where practicable, search terms used)
Esp@cenet, PatSearch

**C. DOCUMENTS CONSIDERED TO BE RELEVANT**

| Category* | Citation of document, with indication, where appropriate, of the relevant passages | Relevant to claim No. |
| --- | --- | --- |
| X | RU 2441308 C1 (ZAKHARENKO ANDREI BORISOVICH) 27.01.2012, the abstract, points 1, 8, 9, 10 of the claims, p. 5-7, fig. 1, 2 | 1-6 |
| A | RU 2437196 C1 (ZAKHARENKO ANDREI BORISOVICH) 20.12.2011 | 1-6 |
| A | RU 2339147 S1 (ZAKHARENKO ANDREI BORISOVICH) 20.11.2008 | 1-6 |
| A | US 4549106 A (LEBERN W. STROUND) 22.10.1985 | 1-6 |
| A | GB 1466565 A (NATIONAL RESEARCH DEVELOPMENT CORPORATION) 09.03.1977 | 1-6 |

☐ Further documents are listed in the continuation of Box C. ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 07 May 2013 (07.05.2013) | 16 May 2013 (16.05.2013) |

| Name and mailing address of the ISA/ RU | Authorized officer |
| --- | --- |
| Facsimile No. | Telephone No. |

Form PCT/ISA/210 (second sheet) (April 2005)

7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2302692
- RU 2437196